# EUROPEAN PATENT APPLICATION

(11) **EP 4 509 276 A1**
(43) Date of publication of application: **19.02.2025**
(21) Application number: 23788042.2
(22) Date of filing: 27.02.2023
(51) Int. Cl.: B25J 9/22, G05B 19/42, B23K 9/127

(54) **ROBOT CONTROL DEVICE AND OFFLINE TEACHING SYSTEM**

(30) Priority: 13.04.2022 JP 2022066608
(71) Applicant: Panasonic Intellectual Property Management Co., Ltd., Osaka-shi, Osaka 540-6207 (JP)
(72) Inventor: HIRAYAMA, Masaya, Kadoma-shi, Osaka 571-0057 (JP); OKAZAKI, Yoshiyuki, Kadoma-shi, Osaka 571-0057 (JP); OKUMA, Katsuaki, Kadoma-shi, Osaka 571-0057 (JP)
(74) Representative: Novagraaf International SA
(86) International application number: PCT/JP2023/006911
(87) International publication number: WO 2023/199620

(57) **Abstract**

The robot control device includes: an acquisition unit configured to acquire information related to a position of a workpiece produced by welding; a storage unit configured to store a set position of the workpiece with a robot configured to perform the production as a reference; a calculation unit configured to calculate a position displacement amount of the workpiece based on the set position of the workpiece and an actual measured position of the workpiece based on the information related to the position of the workpiece; a modification unit configured to modify positions of teaching points of a plurality of teaching programs used by the robot in the production based on the position displacement amount of the workpiece; and a control unit configured to control the robot by using the plurality of modified teaching programs.

## Description

### TECHNICAL FIELD

The present disclosure relates to a robot control device and an offline teaching system.

### BACKGROUND ART

Patent Literature 1 discloses an offline teaching device that displays, in a model diagram, an operation trajectory of a robot when a teaching program is executed, and displays a part of a plurality of position detection commands and a part of a plurality of welding commands. The offline teaching device includes: a display unit configured to display the teaching program and the model diagram; a storage unit configured to store a command constituting the teaching program, and model data of the model diagram; and a control unit configured to control the display unit and the storage unit. The teaching program includes a position detection program including the plurality of position detection commands and a welding program including the plurality of welding commands. Here, the command, the position detection program, and the welding program that constitute the teaching program are created by an operator.

### CITATION LIST

### PATENT LITERATURE

Patent Literature 1: WO2016/021130

### SUMMARY OF INVENTION

### TECHNICAL PROBLEM

The present disclosure provides a robot control device and an offline teaching system that more efficiently modify teaching points of teaching programs for executing different operations by using the same robot.

### SOLUTION TO PROBLEM

The present disclosure provides a robot control device, including: an acquisition unit configured to acquire information related to a position of a workpiece produced by welding; a storage unit configured to store a set position of the workpiece with a robot configured to perform the production as a reference; a calculation unit configured to calculate a position displacement amount of the workpiece based on the set position of the workpiece and an actual measured position of the workpiece based on the information related to the position of the workpiece; a modification unit configured to modify positions of teaching points of a plurality of teaching programs used by the robot in the production based on the position displacement amount of the workpiece; and a control unit configured to control the robot by using the plurality of modified teaching programs.

In addition, the present disclosure provides an offline teaching system, including: a robot control device configured to control a robot configured to produce a workpiece by welding; and an offline teaching device communicably connected to the robot control device and constructing the workpiece and the robot in a virtual space, in which the offline teaching device is configured to: acquire information related to a position of the workpiece, calculate a position displacement amount of the workpiece based on a set position of the workpiece with the robot as a reference and an actual measured position of the workpiece based on the information related to the position of the workpiece, modify positions of teaching points of a plurality of teaching programs used by the robot in the production based on the position displacement amount of the workpiece, and transmit the plurality of modified teaching programs to the robot control device, and the robot control device controls the robot by using the plurality of modified teaching programs.

### ADVANTAGEOUS EFFECTS OF INVENTION

According to the present disclosure, teaching points of teaching programs for executing different operations by using the same robot can be more efficiently modified.

### BRIEF DESCRIPTION OF DRAWINGS

FIG. 1 is a schematic diagram showing a system configuration example of a welding system according to a first embodiment and a modification of the first embodiment.
FIG. 2 is a diagram showing an internal configuration example of a host device, a robot control device, an inspection control device, and an offline teaching device according to the first embodiment and the modification of the first embodiment.
FIG. 3 is a diagram illustrating a relationship between a robot coordinate system and a workpiece.
FIG. 4 is a diagram illustrating an example of an alignment pattern.
FIG. 5 is a diagram illustrating an example of reading the alignment pattern.
FIG. 6 is a diagram illustrating an example of scanning the workpiece.
FIG. 7 is a diagram illustrating an example of calculating a position displacement amount of the workpiece with respect to a welding robot.
FIG. 8 is a flowchart illustrating a correction procedure example of a teaching program executed by the robot control device according to the first embodiment.
FIG. 9 is a sequence diagram illustrating a correction procedure example of teaching programs executed by the robot control device and the offline teaching device according to the modification of the first embodiment.

### DESCRIPTION OF EMBODIMENTS

### (Background of Present Disclosure)

As in Patent Literature 1, in the prior art, there is an offline teaching device in which the offline teaching device is used to teach a robot, such as a welding robot, teaching programs (for example, a position detection program and a welding program) including operation procedures of an operation, an operation trajectory, and the like. Based on an operation instruction, the robot performs the operation by reading various programs corresponding to the operation instruction.

The operation trajectory includes positions of teaching points which indicate positions where the robot is required to pass through and reach. Generally, the teaching points are recorded as relative positions to the robot (that is, positions with a robot coordinate system as a reference). Therefore, if there is a position displacement in a position of an operation object (hereinafter, referred to as "workpiece") with respect to the robot and the positions of the teaching points are not modified, the robot has a problem such as being unable to reach a processing point of the workpiece. Therefore, it is desirable to modify the positions of the teaching points in accordance with a form of the position displacement. However, since the number of the teaching points can be several hundred to several thousand depending on the workpiece, there is a problem that the number of man-hours required for the modification is extremely large.

When a single robot is used to produce a workpiece, the robot uses a plurality of different teaching programs to execute each operation process. In such a case, the robot cannot produce a workpiece until the modification of the positions of the teaching points of all the teaching programs used by the robot is completed, and productivity may be reduced.

In the prior art, a robot may measure a position of a workpiece using a contact sensor, camera, or the like in order to calculate a position displacement amount of the workpiece. However, when a surface of the workpiece is a flat horizontal surface, it is difficult for the contact sensor to determine whether to be in contact with the workpiece, and the position of the workpiece cannot be measured. There is a problem that when a camera is used to image a workpiece, every time the robot measures the position of the workpiece and modifies the teaching program, it is necessary to stop the production of the workpiece by attaching and detaching the camera, so that a condition for modifying the positions of the teaching points is limited.

Hereinafter, embodiments specifically disclosing a robot control device and an offline teaching system according to the present disclosure will be described in detail with reference to the drawings as appropriate. However, an unnecessarily detailed description may be omitted. For example, detailed descriptions of well-known matters and a redundant description of substantially the same configuration may be omitted. This is to avoid unnecessary redundancy of the following description and to facilitate understanding of those skilled in the art. The accompanying drawings and the following description are provided for those skilled in the art to fully understand the present disclosure, and are not intended to limit the subject matter described in the claims.

Hereinafter, an object (for example, metal) subject to main welding is defined as an "original workpiece", and an object produced (manufactured) by the main welding is defined as a "workpiece". The "workpiece" is not limited to a workpiece produced by the main welding executed once, and may be a composite workpiece produced by the main welding executed twice or more. A process in which the original workpiece and another original workpiece are joined by a welding robot to produce a workpiece is defined as "main welding".

### (First Embodiment)

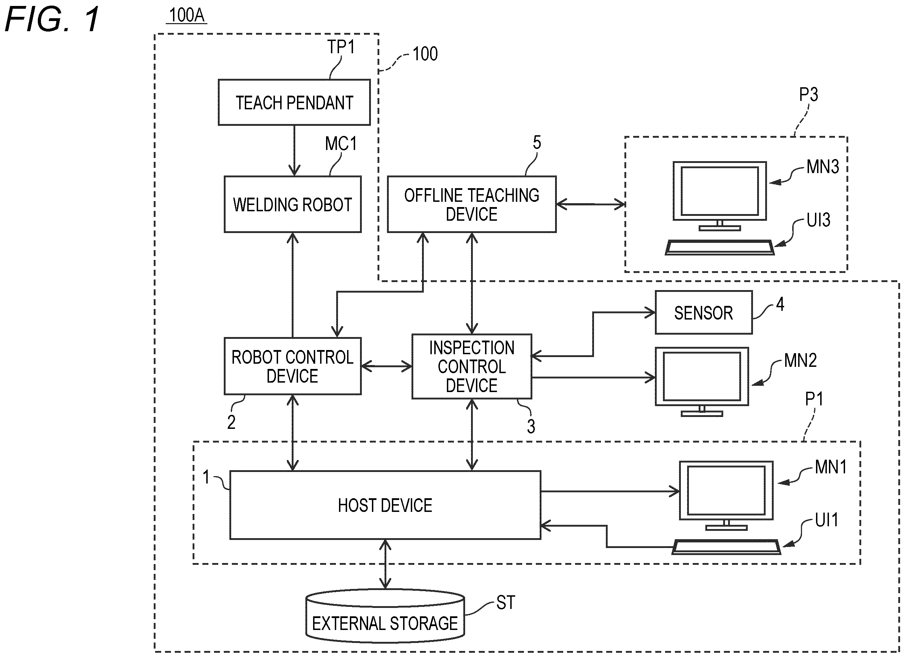

FIG. 1 is a schematic diagram showing a system configuration example of a welding system 100, 100A according to a first embodiment and a modification of the first embodiment. First, a configuration of the welding system 100 according to the first embodiment will be described. The welding system 100A according to the modification of the first embodiment does not include an offline teaching device 5, a monitor MN3, and an input interface UI3, and thus, descriptions thereof are omitted here.

The welding system 100 according to the first embodiment is a configuration including a host device 1 connected to an external storage ST, an input interface UI1, and a monitor MN1, a robot control device 2, an inspection control device 3, a sensor 4, a welding robot MC1, and a monitor MN2. A teach pendant TP1 is not an essential component and may be omitted. The monitor MN2 is not an essential component and may be omitted.

The host device 1 integrally controls start and completion of main welding executed by the welding robot MC1 via the robot control device 2. For example, the host device 1 reads, from the external storage ST, welding related information input or set in advance by a user (for example, a welding operator or a system administrator. The same applies hereinafter.), generates an execution command for the main welding which includes contents of the welding related information by using the welding related information, and transmits the execution command for the main welding to the corresponding robot control device 2. When the main welding executed by the welding robot MC1 is completed, the host device 1 receives, from the robot control device 2, a main welding completion report indicating that the main welding executed by the welding robot MC1 is completed, updates to a status indicating that the corresponding main welding is completed, and records the status in the external storage ST.

The main welding execution command described above is not limited to being generated by the host device 1, and may be generated by, for example, an operation panel (for example, PLC: programmable logic controller) of equipment in a factory or the like where the main welding is executed, or an operation panel (for example, the teach pendant TP1) of the robot control device 2. The teach pendant TP1 is a device for operating the welding robot MC1 connected to the robot control device 2.

In addition, the host device 1 integrally controls start and completion of a bead appearance inspection using the robot control device 2, the inspection control device 3, and the sensor 4. For example, in response to reception of the main welding completion report from the robot control device 2, the host device 1 generates an execution command for the bead appearance inspection on a workpiece produced by the welding robot MC1, and transmits the execution command to the robot control device 2 and the inspection control device 3. When the bead appearance inspection is completed, the host device 1 receives, from the inspection control device 3, an appearance inspection report indicating that the bead appearance inspection is completed, updates to a status indicating that the corresponding bead appearance inspection is completed, and records the status in the external storage ST.

Here, the welding related information is information indicating contents of the main welding executed by the welding robot MC1, is created in advance for each process of the main welding, and is registered in the external storage ST. The welding related information includes, for example, the number of original workpieces used in the main welding, workpiece information including an ID of the original workpiece used in the main welding, lot information, a name, and a welded portion (for example, information of a welding line and position information of the welding line) of the original workpiece, a scheduled execution date on which the main welding is executed, the number of produced original workpieces, and various welding conditions during the main welding. The welding related information is not limited to data of items described above, and may further include already created teaching programs (see below) of welding operation and scan operation, and information such as welding operation setting information and scan operation setting information used to create these teaching programs.

The welding operation setting information described here may be a group of various parameters necessary for the welding operation, such as various welding conditions for the main welding, and a retracted position of a welding torch 400 before the start of welding and after the end of welding.

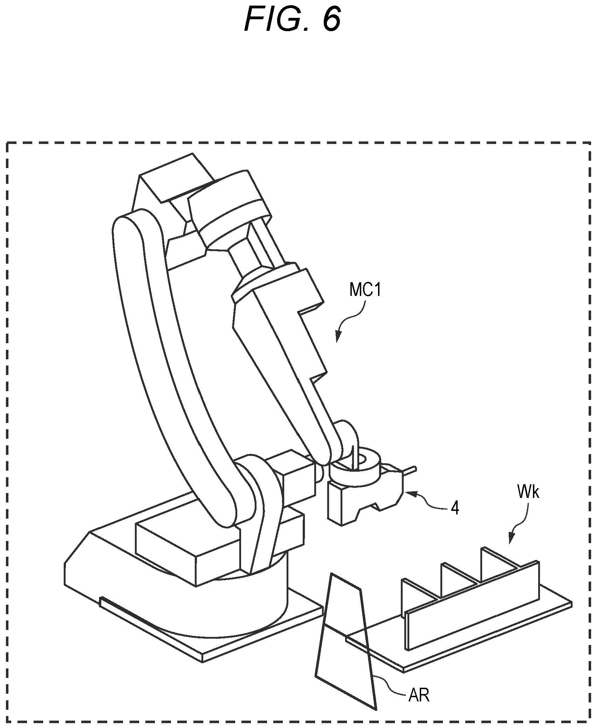

The scan operation setting information described here may be a group of various parameters necessary for the scan operation on a weld bead or other appearance inspection targets, such as a distance between the sensor 4 and a workpiece Wk, information of the sensor 4 (for example, an effective scan range AR (see FIG. 6)), a measurement range, approach information, a scan run-up (idle run) section, a scan section, and retraction information (for example, information of a retraction start position and a retraction end position, instruction information for instructing the retraction), and avoidance information, and necessary for an appearance scan for position measurement of the workpiece Wk.

In addition, the welding condition includes, for example, a material and a thickness of the original workpiece, a material and a wire diameter of a welding wire 301, a type of a shielding gas, a flow rate of the shielding gas, a set average value of welding current, a set average value of a welding voltage, a feeding speed and a feeding amount of the welding wire 301, the number of times of welding, and a welding time. Further, in addition to the above, the welding condition may include, for example, information indicating a type of the main welding (for example, TIG welding, MAG welding, and pulse welding), a moving speed and a moving time of a manipulator 200.

Based on the execution command for the main welding which is transmitted from the host device 1, the robot control device 2 causes the welding robot MC1 to execute the main welding using an original workpiece designated by the execution command. The welding related information described above is not limited to being managed by the host device 1 with reference to the external storage ST, and may be managed by, for example, the robot control device 2. In this case, since the robot control device 2 can know a state in which the main welding is completed, in the welding related information, an actual execution date may be managed instead of the scheduled execution date on which a welding process is scheduled to be executed. Although a type of the main welding is not limited in the present specification, in order to make the description easy to understand, a process of joining a plurality of original workpieces to produce one workpiece will be described as an example.

The host device 1 is connected to the monitor MN1, the input interface UI1, and the external storage ST such that the host device 1 can input data to and output data from the monitor MN1, the input interface UI1, and the external storage ST, and further connected to the robot control device 2 and the inspection control device 3 such that data can be communicated among the host device 1, the robot control device 2, and the inspection control device 3. The host device 1 may be a terminal device P1 that includes the monitor MN1 and the input interface UI1 in an integrated manner, and may further include the external storage ST in an integrated manner. In this case, the terminal device P1 is a personal computer (PC) that is used by the user before the main welding is executed. The terminal device P1 is not limited to the PC described above, and may be a computer device having a communication function, such as a smartphone or a tablet terminal.

The monitor MN1 may be implemented by a display device such as a liquid crystal display (LCD) or an organic electroluminescence (EL). The monitor MN1 may display, for example, a screen showing a notification indicating that the main welding is completed or a notification indicating that the bead appearance inspection is completed, which is output from the host device 1. In addition, a speaker (not shown) may be connected to the host device 1 instead of the monitor MN1 or together with the monitor MN1, and the host device 1 may output, via the speaker, a sound of a content indicating that the main welding is completed or a content indicating that the bead appearance inspection is completed.

The input interface UI1 is a user interface that detects an input operation of the user and outputs the input operation to the host device 1, and may be implemented by, for example, a mouse, a keyboard, or a touch panel. The input interface UI1 receives, for example, an input operation when the user creates the welding related information or an input operation when the execution command for the main welding is transmitted to the robot control device 2.

The external storage ST is implemented by, for example, a hard disk drive or a solid state drive. The external storage ST stores, for example, data on the welding related information created for each main welding, a status of the workpiece Wk produced by the main welding (production status), and workpiece information of the workpiece Wk (see description above). The external storage ST may store for each welding line a teaching program of welding operation and a teaching program of scan operation created by the robot control device 2. The teaching programs of welding operation and scan operation will be described later respectively.

The robot control device 2 is connected between the host device 1 and such that data can be communicated between the robot control device 2 and the host device 1, and is connected to the welding robot MC1 such that data can be communicated between the robot control device 2 and the welding robot MC1. In response to reception of the execution command for the main welding which is transmitted from the host device 1, the robot control device 2 creates a main welding program based on the teaching program of welding operation corresponding to this execution command, and controls the welding robot MC1 to execute the main welding.

If the robot control device 2 detects that the main welding is completed, the robot control device 2 generates a main welding completion report indicating that the main welding is completed, and notifies the host device 1 of the main welding completion report. Accordingly, the host device 1 can appropriately detect the completion of the main welding by the robot control device 2. A method of detecting the completion of the main welding by the robot control device 2 may be, for example, a method of determining the completion of the main welding based on a signal indicating the completion of the main welding from a sensor (not shown) provided in a wire feeding device 300, or may be a known method, and contents of the method of detecting the completion of the main welding are not limited.

The robot control device 2 is connected between the host device 1 and the inspection control device 3 such that data can be communicated among the robot control device 2, the host device 1, and the inspection control device 3, and is connected to the welding robot MC1 such that data can be communicated between the robot control device 2 and the welding robot MC1. In response to reception of the execution command for the main welding which is transmitted from the host device 1, the robot control device 2 measures a position displacement amount from the workpiece Wk. Based on the measured position displacement amount of the workpiece Wk, the robot control device 2 corrects positions of teaching points included in the teaching program of scan operation, and corrects positions of teaching points included in the teaching program of welding operation. The robot control device 2 creates a main welding program by using the modified teaching program of welding operation, and controls the welding robot MC1 to execute the main welding based on the created main welding program.

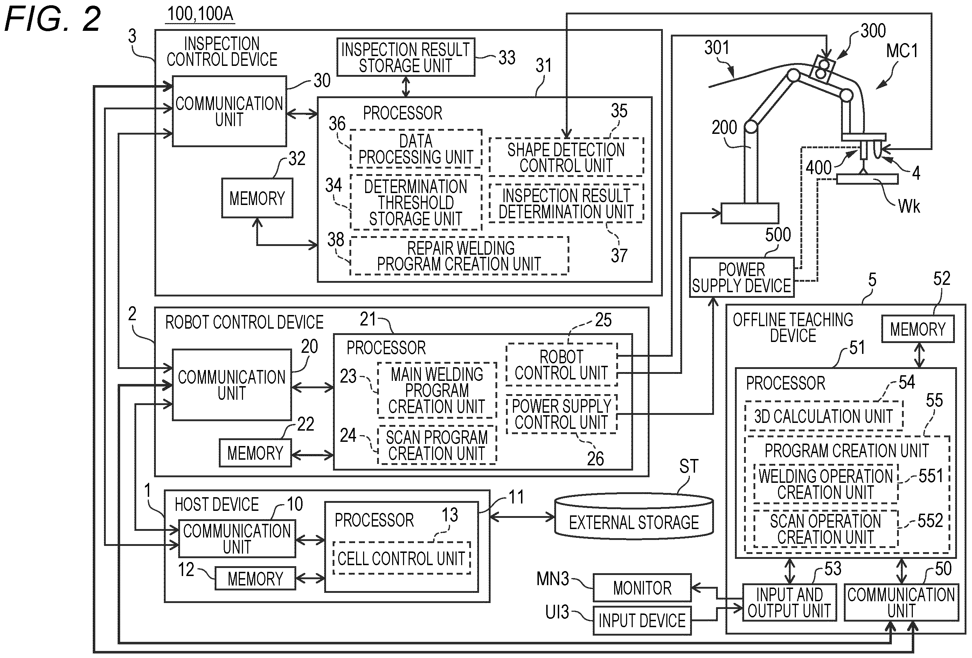

In response to reception of an execution command for the bead appearance inspection which is transmitted from the host device 1, the robot control device 2 creates a scan program based on the teaching program of scan operation corresponding to this execution command, and controls the welding robot MC1 (see FIG. 2) to execute an appearance inspection on a weld bead.

In response to reception of a scan execution command for the workpiece Wk which is transmitted from the host device 1, the robot control device 2 controls the welding robot MC1 (see FIG. 2) to which the sensor 4 is attached to execute an appearance scan for acquiring an appearance shape of the workpiece Wk.

Based on the teaching program of scan operation corresponding to this execution command, the robot control device 2 controls the welding robot MC1 (see FIG. 2) to which the sensor 4 is attached to execute the appearance inspection on the weld bead generated on the workpiece Wk. Although the appearance inspection report indicating that the bead appearance inspection is completed is transmitted from the inspection control device 3 to the host device 1, the appearance inspection report may be transmitted to the host device 1 from the robot control device 2 itself or from the robot control device 2 receiving an instruction from the inspection control device 3. Accordingly, the host device 1 can appropriately detect the completion of the bead appearance inspection.

The welding robot MC1 as an example of a robot is connected to the robot control device 2 such that data can be communicated between the welding robot MC1 and the robot control device 2. The welding robot MC1 executes the main welding commanded from the host device 1 under control of the corresponding robot control device 2. The welding robot MC1 moves the sensor 4 based on the teaching program of scan operation, thereby executing the bead appearance inspection (appearance scan) commanded by the host device 1.

The inspection control device 3 is connected to the host device 1, the robot control device 2, and the sensor 4 such that data can be communicated among the inspection control device 3, the host device 1, the robot control device 2, and the sensor 4. In response to reception of the execution command for the bead appearance inspection which is transmitted from the host device 1, the inspection control device 3 executes, in cooperation with the sensor 4 included in the welding robot MC1, the bead appearance inspection on a welded portion (that is, the weld bead) of the workpiece Wk produced by the welding robot MC1 (for example, inspection of whether the weld bead formed in the workpiece satisfies a predetermined welding standard) in accordance with the corresponding teaching program of scan operation of the workpiece Wk. As a result of the scan operation, the inspection control device 3 uses three-dimensional shape data (for example, point cloud data capable of specifying a three-dimensional shape of the weld bead) related to a shape of the weld bead acquired by the sensor 4 to perform the bead appearance inspection based on comparison with master data of non-defective workpieces predetermined for each workpiece.

The inspection control device 3 performs the bead appearance inspection, generates an appearance inspection report including an inspection determination result of the bead appearance inspection and the notification indicating that the bead appearance inspection is completed, transmits the appearance inspection report to the host device 1, and outputs the appearance inspection report to the monitor MN2. If the inspection control device 3 determines that a defect is detected in the bead appearance inspection on the workpiece, the inspection control device 3 generates an appearance inspection report including an appearance inspection result including information on a defect section for repair welding of the defect, and transmits the appearance inspection report to the host device 1. In addition, if the inspection control device 3 determines that a defect is detected by the bead appearance inspection on the workpiece, the inspection control device 3 creates, by using the appearance inspection result including the information on the defect section, a repair welding program for performing modification such as repair on the defect portion. The inspection control device 3 transmits, to the host device 1, the repair welding program and the appearance inspection result in association with each other.

The inspection control device 3 scans an appearance of the workpiece Wk based on an execution command, transmitted via the host device 1, for the appearance scan that scans the workpiece Wk. As a result of the appearance scan, the inspection control device 3 transmits, to the robot control device 2, the three-dimensional shape data (for example, the point cloud data capable of specifying the three-dimensional shape of the workpiece Wk) related to the shape of the workpiece Wk acquired by the sensor 4.

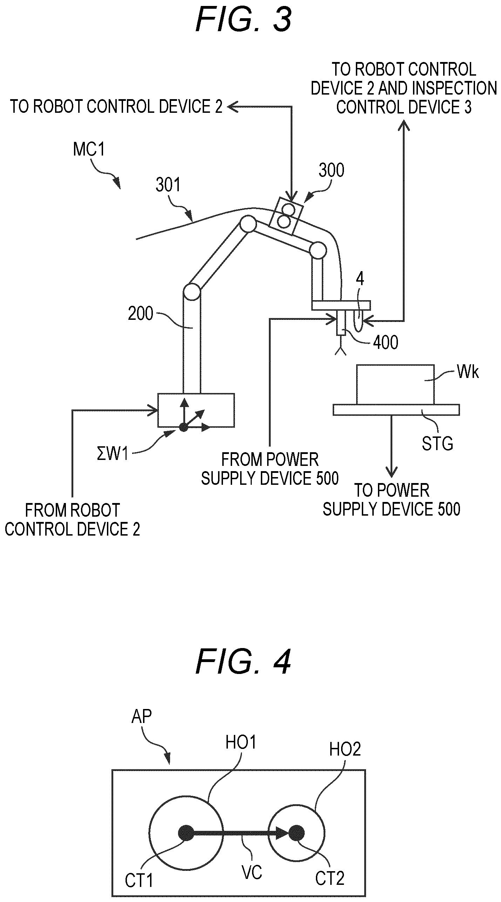

The sensor 4 is connected to the inspection control device 3 such that data can be communicated between the sensor 4 and the inspection control device 3. The sensor 4 is attached to the welding robot MC1, and three-dimensionally scans the workpiece Wk placed on a stage STG (see FIG. 3) in accordance with driving of the manipulator 200 under the control of the robot control device 2. The sensor 4, in accordance with the driving of the manipulator 200 under the control of the robot control device 2, acquires the three-dimensional shape data (for example, the point cloud data and mesh data) of the workpiece Wk which can specify a position and the like of the workpiece Wk placed on the stage STG, and transmits the data to the inspection control device 3.

The monitor MN2 may be implemented by a display device such as an LCD or an organic EL. The monitor MN2 displays, for example, a screen showing the notification indicating that the bead appearance inspection is completed or a screen showing the notification and a bead appearance inspection result, which are output from the inspection control device 3. In addition, the speaker (not shown) may be connected to the inspection control device 3 instead of the monitor MN2 or together with the monitor MN2, and the inspection control device 3 may output, via the speaker, a sound indicating a content of the notification indicating that the bead appearance inspection is completed, or contents of the notification and the bead appearance inspection result.

Here, the position information of the welding line is information indicating a position of a welding line welded to the workpiece Wk in a main welding process.

The teaching program of welding operation is created based on the position of the welding line, and is a program for causing the welding robot MC1 to execute the main welding. The teaching program of welding operation includes information on positions, distances, and angles (posture) of teaching points for executing various operations (for example, approaching, retracting, avoiding, welding) for performing the main welding on the workpiece Wk using the welding torch 400, and information on the welding conditions and the like. The teaching program of welding operation may be generated for each welding line, or may be generated so as to be able to execute the main welding for each of any number of welding lines.

The teaching program of scan operation described here is a program that is created based on the welding line and causes the welding robot MC1 to perform the bead appearance inspection on at least one weld bead created by the main welding. The teaching program of scan operation includes information on positions, distances, and angles (posture) of teaching points for executing various operations (for example, approach, retract, avoidance, welding) for executing the bead appearance inspection on the created weld bead by using the sensor 4.

The teach pendant TP1 is connected to the robot control device 2 such that data can be transmitted to and received from the robot control device 2. The teach pendant TP1 transmits, to the robot control device 2, the position information of the welding line defined by an operation of the user using the actual welding robot MC1 and the workpiece Wk. The robot control device 2 stores in a memory 22 the position information of the welding line, which is transmitted from the teach pendant TP1, (see FIG. 2) and transmits the information to the robot control device 2.

FIG. 2 is a diagram showing an internal configuration example of the host device 1, the robot control device 2, the inspection control device 3, and the offline teaching device 5 according to the first embodiment and the modification of the first embodiment. In order to make the description easy to understand, the monitors MN1 and MN2 and the input interfaces UI1 and UI3 are not shown in FIG. 2. Here, the internal configuration example of each configuration of the welding system 100 according to the first embodiment will be described. The welding system 100A according to the modification of the first embodiment does not include the offline teaching device 5, the monitor MN3, and the input interface UI3, and thus, descriptions thereof are omitted here.

Under the control of the robot control device 2, the welding robot MC1 executes the main welding process based on the teaching program of welding operation using the welding torch 400. The welding robot MC1 executes, for example, arc welding in the main welding process. However, the welding robot MC1 may execute welding (for example, laser welding and gas welding) other than the arc welding. In this case, although not shown, a laser head, instead of the welding torch 400, may be connected to a laser oscillator via an optical fiber. The welding robot MC1 is a configuration including at least the manipulator 200, the wire feeding device 300, the welding wire 301, and the welding torch 400.

The manipulator 200 includes an articulated arm, and moves each arm based on a control signal from a robot control unit 25 of the robot control device 2. Accordingly, the manipulator 200 can change a positional relationship between the workpiece Wk and the welding torch 400 (for example, an angle of the welding torch 400 relative to the welding robot MC1) by driving the arm.

The wire feeding device 300 controls the feeding speed of the welding wire 301 based on the control signal from the robot control device 2. The wire feeding device 300 may include a sensor (not shown) capable of detecting a remaining amount of the welding wire 301. Based on an output of the sensor, the robot control device 2 can detect that the main welding process is completed.

The welding wire 301 is held by the welding torch 400, and power is supplied from a power supply device 500 to the welding torch 400, thereby an arc is generated between a tip end of the welding wire 301 and the workpiece Wk, and the arc welding is performed. Showing and a description of a configuration and the like for supplying a shielding gas to the welding torch 400 are omitted for the convenience of description.

The host device 1 generates execution commands for various processes of the main welding or the bead appearance inspection by using the welding related information input or set in advance by the user, and transmits the execution commands to the robot control device 2. The host device 1 is a configuration including at least a communication unit 10, a processor 11, and a memory 12.

The communication unit 10 is connected to the robot control device 2, the inspection control device 3, and the external storage ST such that data can be communicated among the communication unit 10, the robot control device 2, the inspection control device 3, and the external storage ST. The communication unit 10 transmits, to the robot control device 2 or the inspection control device 3, the execution commands for various processes of the main welding or the bead appearance inspection, which are generated by the processor 11. The communication unit 10 receives the main welding completion report transmitted from the robot control device 2 and the appearance inspection report transmitted from the inspection control device 3, and outputs the main welding completion report and the appearance inspection report to the processor 11. The execution command for the main welding may include, for example, a control signal for controlling the manipulator 200, the wire feeding device 300, and the power supply device 500 included in the welding robot MC1.

The processor 11 is implemented by, for example, a central processing unit (CPU) or a field programmable gate array (FPGA), and executes various processes and controls in cooperation with the memory 12. Specifically, the processor 11 implements functions of a cell control unit 13 by referring to a program stored in the memory 12 and executing the program.

The memory 12 includes, for example, a random access memory (RAM) as a workpiece memory used when processing of the processor 11 is executed, and a read only memory (ROM) that stores a program that defines the processing of the processor 11. Data generated or acquired by the processor 11 is temporarily stored in the RAM. The program that defines the processing of the processor 11 is written into the ROM. In addition, the memory 12 stores the data of the welding related information read from the external storage ST, the status of the workpiece, and the like.

Based on the welding related information stored in the external storage ST, the cell control unit 13 creates an execution command for executing the main welding, the bead appearance inspection on the workpiece Wk, the appearance scan on the workpiece Wk, or the repair welding. Based on the welding related information stored in the external storage ST and the teaching programs of welding operation and scan operation transmitted from the robot control device 2, the cell control unit 13 creates the main welding program for the main welding, the scan program related to driving of the welding robot MC1 when measuring the position displacement amount of the workpiece Wk, or when performing the bead appearance inspection on the workpiece Wk. Further, the cell control unit 13 creates execution commands for these created programs. The scan program for performing the appearance scan (position measurement) on the workpiece Wk or an appearance inspection on the weld bead of the workpiece Wk may be created in advance for each workpiece Wk and stored in the external storage ST, and in this case, the cell control unit 13 reads and acquires various programs from the external storage ST. The cell control unit 13 may generate different execution commands for various processes of the main welding to be executed by the welding robot MC1. The execution commands for the main welding appearance inspection and the appearance scan, which are generated by the cell control unit 13, are transmitted to the corresponding robot control device 2 or inspection control device 3 via the communication unit 10.

The robot control device 2 refers to the corresponding program based on the execution command for the main welding, the bead appearance inspection, or the appearance scan, which is transmitted from the host device 1. The robot control device 2 controls the welding robot MC1 (for example, the manipulator 200, the wire feeding device 300, the power supply device 500) based on the referenced program. The robot control device 2 is a configuration including at least a communication unit 20, a processor 21, and a memory 22.

The communication unit 20 as an example of an acquisition unit is connected to the host device 1, the welding robot MC1, the inspection control device 3, and the teach pendant TP1 such that data can be communicated among the communication unit 20, the host device 1, the welding robot MC1, the inspection control device 3, and the teach pendant TP1. Although the showing is simplified in FIG. 2, data is transmitted and received between the robot control unit 25 and the manipulator 200, between the robot control unit 25 and the wire feeding device 300, and between a power supply control unit 26 and the power supply device 500 via the communication unit 20. The communication unit 20 receives execution command for the main welding or the bead appearance inspection, which is transmitted from the host device 1. The communication unit 20 receives the position information of the welding line, which is transmitted from the teach pendant TP1, the teaching program of welding operation, and the teaching program of scan operation. The communication unit 20 transmits the workpiece information of the workpiece Wk produced by the main welding to the host device 1.

Here, the workpiece information not only includes an ID of the workpiece but also includes at least an ID, a name, and a welded portion of an original workpiece used in the main welding, and a welding condition at the time of executing the main welding.

The processor 21 as an example of a calculation unit and a modification unit is implemented by, for example, a CPU or an FPGA, and executes various processes and controls in cooperation with the memory 22. Specifically, the processor 21 implements functions of a main welding program creation unit 23, a scan program creation unit 24, the robot control unit 25, and the power supply control unit 26 by referring to a program stored in the memory 22 and executing the program. In addition, the processor 21 uses the teaching program of welding operation to execute, based on the main welding program generated by the main welding program creation unit 23, calculation of a parameter for controlling the welding robot MC1 (specifically, the manipulator 200, the wire feeding device 300, and the power supply device 500) controlled by the robot control unit 25.

Based on the shape of the workpiece Wk acquired by the sensor 4 and the shape of the welding torch 400 of the welding robot MC1 or an alignment pattern AP (see FIG. 4), the processor 21 calculates the position displacement amount (distance and angle) of the workpiece Wk and a position displacement amount (distance and angle) of the welding robot MC1. The processor 21 modifies positions of a plurality of teaching points included in the teaching program of scan operation based on the calculated position displacement amount of the workpiece Wk.

The processor 21 modifies the positions of the teaching points included in the teaching programs of welding operation and scan operation based on the calculated position displacement amount of the workpiece Wk. The processor 21 outputs the modified teaching program of welding operation to the main welding program creation unit 23. The processor 21 outputs the modified teaching program of scan operation to the scan program creation unit 24.

The memory 22 as an example of a storage unit includes, for example, a RAM as a workpiece memory used when processing of the processor 21 is executed, and a ROM that stores a program that defines the processing of the processor 21. Data generated or acquired by the processor 21 is temporarily stored in the RAM. The program that defines the processing of the processor 21 is written into the ROM. The memory 22 stores data of the execution command for the main welding, the bead appearance inspection, or the appearance scan, which is transmitted from the host device 1, welding related information in which the workpiece information of the workpiece Wk produced by the main welding is associated with the position information of the welding line, the position information of the welding line, which is transmitted from the teach pendant TP1, and the like. The welding related information including the workpiece information of the workpiece Wk may include the teaching programs of welding operation and scan operation, the position information of the welding line used for creating the teaching programs of welding operation and scan operation, and the welding operation setting information.

Based on the execution command for the main welding, which is transmitted from the host device 1 via the communication unit 20, the main welding program creation unit 23 uses workpiece information (for example, an ID and a name of the workpiece, information on component parts (original workpiece, parts, and the like), and the position information of the welding line) of each of the plurality of original workpieces, which is included in the execution command, and the teaching program of welding operation associated with the workpiece information to generate the main welding program of the main welding to be executed by the welding robot MC1. When acquiring from the processor 21 the teaching program of welding operation after the positions of the teaching points are modified, the main welding program creation unit 23 creates the main welding program for the main welding based on the acquired teaching program of welding operation.

The main welding program may include various parameters such as welding current, a welding voltage, an offset amount, a welding speed, and a posture and angle of the welding torch 400 for controlling the power supply device 500, the manipulator 200, the wire feeding device 300, the welding torch 400, and the like during the execution of the main welding. The main welding program may be stored in the processor 21 or may be stored in the RAM of the memory 22.

Based on the execution command for the appearance scan or the appearance inspection, which is transmitted from the host device 1 via the communication unit 20, the scan program creation unit 24 uses the workpiece information (for example, an ID and a name of the workpiece, information on component parts (original workpiece, parts, and the like), and the position information of the welding line) of each of the plurality of original workpieces, which is included in the execution command, and the teaching program of scan operation associated with the workpiece information to create the scan program for the appearance scan or the bead appearance inspection on the workpiece Wk, which is executed by the welding robot MC1. When acquiring from the processor 21 the teaching program of scan operation in which the positions of the teaching points are modified, the scan program creation unit 24 creates the scan program based on the acquired teaching program of welding operation.

The robot control unit 25 as an example of a control unit generates a control signal for driving the welding robot MC1 (specifically, the manipulator 200, the wire feeding device 300, and the power supply device 500) based on the main welding program generated by the main welding program creation unit 23. The robot control unit 25 transmits the generated control signal to the welding robot MC1.

The robot control unit 25 generates a control signal for driving the welding robot MC1 (specifically, the sensor 4 and the manipulator 200) based on the scan program generated by the scan program creation unit 24. The robot control unit 25 transmits the generated control signal to the welding robot MC1.

The robot control unit 25 drives the manipulator 200 and the sensor 4 of the welding robot MC1 based on the teaching program of scan operation (that is, the scan program) transmitted from the teach pendant TP1. Accordingly, the sensor 4 attached to the welding robot MC1 scans the appearance of the workpiece Wk (that is, a plurality of original workpieces constituting the workpiece Wk), the alignment pattern AP (see FIG. 4) attached to the workpiece Wk, the weld bead, or the like to acquire the shape of the workpiece Wk, the alignment pattern AP, or the weld bead.

The power supply control unit 26 drives the power supply device 500 based on a calculation result of the main welding program generated by the main welding program creation unit 23.

FIG. 1 shows a configuration in which the three-dimensional shape data obtained by scanning performed by the sensor 4 is transmitted to the inspection control device 3, and as shown in FIG. 3, the three-dimensional shape data may be transmitted from the sensor 4 to the robot control device 2 directly. In such a case, the sensor 4 is connected to the communication unit 20 of the robot control device 2 such that data can be transmitted and received, and transmits, to the robot control device 2, the three-dimensional shape data related to the appearance shape of the workpiece Wk or the three-dimensional shape data related to the shape of the alignment pattern AP.

Based on the execution command for the bead appearance inspection, which is transmitted from the host device 1, the inspection control device 3 controls processing of the bead appearance inspection and the appearance scan on the workpiece Wk produced by the main welding executed by the welding robot MC1 or on the workpiece Wk repaired by the repair welding executed once or more. The bead appearance inspection is, for example, an inspection of whether the weld bead formed in the workpiece Wk satisfies a predetermined welding standard (for example, a welding quality standard required by each of the users), and is implemented by the inspection determination described above. The inspection control device 3 determines (inspects) whether an appearance shape of the weld bead formed in the workpiece Wk satisfies the predetermined welding standard based on the three-dimensional shape data related to the shape of the weld bead acquired by the sensor 4 (for example, the point cloud data capable of specifying the three-dimensional shape of the weld bead). The inspection control device 3 transmits, to the robot control device 2, the three-dimensional shape data related to the shape of the weld bead acquired by the sensor 4 or the three-dimensional shape data related to the shape of the workpiece Wk. The inspection control device 3 is a configuration including at least a communication unit 30, a processor 31, a memory 32, and an inspection result storage unit 33.

The communication unit 30 is connected to the host device 1, the robot control device 2, and the sensor 4 such that data can be communicated among the communication unit 30, the host device 1, the robot control device 2, and the sensor 4. Although showing is simplified in FIG. 2, data is transmitted and received between a shape detection control unit 35 and the sensor 4 via the communication unit 30. The communication unit 30 receives the execution command for the bead appearance inspection, which is transmitted from the host device 1. The communication unit 30 transmits an inspection determination result of the bead appearance inspection using the sensor 4 to the host device 1, and transmits data of the three-dimensional shape of the weld bead acquired by the sensor 4 to the robot control device 2.

The processor 31 is implemented by, for example, a CPU or an FPGA, and executes various processes and controls in cooperation with the memory 32. Specifically, the processor 31 implements functions of a determination threshold storage unit 34, the shape detection control unit 35, a data processing unit 36, an inspection result determination unit 37, a repair welding program creation unit 38, and the like by referring to a program stored in the memory 32 and executing the program.

The memory 32 includes, for example, a RAM as a workpiece memory used when processing of the processor 31 is executed, and a ROM that stores a program that defines the processing of the processor 31. Data generated or acquired by the processor 31 is temporarily stored in the RAM. The program that defines the processing of the processor 31 is written into the ROM.

The inspection result storage unit 33 is implemented by, for example, a hard disk or a solid state drive. The inspection result storage unit 33 stores data indicating a result of the bead appearance inspection on the welded portion of the workpiece Wk (for example, a workpiece or repair workpiece) as an example of the data generated or acquired by the processor 31. The data indicating the result of the bead appearance inspection is generated by, for example, the inspection result determination unit 37.

The determination threshold storage unit 34 is implemented by, for example, a cache memory provided in the processor 31, is set in advance by an operation of the user, and stores information on each of thresholds (for example, a threshold set for each type of welding defect) corresponding to the welded portion and the processing of the bead appearance inspection performed by the inspection result determination unit 37. The respective thresholds are, for example, allowable ranges of position displacement of the weld bead, thresholds for a length, a height, and a width of the weld bead, and thresholds for holes, pits, undercuts, and spattering. The determination threshold storage unit 34 may store, as thresholds during the bead appearance inspection after the repair welding, allowable ranges that satisfy a minimum welding standard (quality) required by a customer or the like (for example, a minimum allowable value and a maximum allowable value). These thresholds are used in the processing of determining whether the inspection result created by the inspection result determination unit 37 indicates passing the bead appearance inspection. Furthermore, the determination threshold storage unit 34 may store an upper limit of the number of times of the bead appearance inspection for each welded portion. Accordingly, if a predetermined upper limit of the number of times is exceeded when repairing a defect portion by the repair welding, the inspection control device 3 determines that it is difficult or impossible to modify the defect portion by automatic repair welding performed by the welding robot MC1, and can prevent a decrease in an operating rate of the welding system 100.

Based on the execution command for the bead appearance inspection on the welded portion of the workpiece Wk (for example, workpiece), which is transmitted from the host device 1, the shape detection control unit 35 acquires the transmitted three-dimensional shape data (for example, the point cloud data capable of specifying the three-dimensional shape of the weld bead) related to the shape of the weld bead is acquired by the sensor 4. Based on the execution command for the appearance scan of the workpiece Wk (for example, the workpiece), which is transmitted from the host device 1, the shape detection control unit 35 acquires the transmitted three-dimensional shape data (for example, the point cloud data capable of specifying the three-dimensional shape of the workpiece Wk) related to the shape of the workpiece Wk acquired by the sensor 4. Specifically, if the sensor 4 reaches a position where the weld bead or the workpiece Wk can be imaged (in other words, a three-dimensional shape of the welded portion or the workpiece Wk can be detected) according to the driving of the manipulator 200 by the robot control device 2 described above, the shape detection control unit 35, for example, causes the sensor 4 to emit a laser beam to obtain three-dimensional shape data related to the shape of the weld bead or the workpiece Wk. In response to the reception of the three-dimensional shape data acquired by the sensor 4, the shape detection control unit 35 transmits the three-dimensional shape data to the data processing unit 36.

In response to the acquisition of the three-dimensional shape data (see above) related to the shape of the weld bead from the shape detection control unit 35, the data processing unit 36 converts the data into a data format suitable for various inspection determinations executed by the inspection result determination unit 37. In the conversion of the data format, modification processing may be executed as a so-called preprocessing to remove unnecessary point cloud data (for example, noise) included in the three-dimensional shape data (that is, the point cloud data), and the preprocessing may be omitted. The data processing unit 36 generates image data representing the three-dimensional shape of the weld bead by, for example, performing statistical processing on the input shape data. The data processing unit 36 may perform edge enhancement modification that enhances an edge portion of the weld bead in order to enhance the position and shape of the weld bead as data for the inspection determination. The data processing unit 36 may count the number of times the bead appearance inspection is executed for each welding defect portion, and determine that it is difficult or impossible to modify the welding defect portion due to the automatic repair welding if the welding inspection result is not good even if the number of times of the bead appearance inspection exceeds the number of times stored in advance in the memory 32. In this case, the inspection result determination unit 37 generates an alert screen including a position of the welding defect portion and a type of the welding defect (for example, hole, pit, undercut, spattering, and protrusion), and transmits the generated alert screen to the host device 1 via the communication unit 30. The alert screen transmitted to the host device 1 is displayed on the monitor MN1. The alert screen may be displayed on the monitor MN2.

The data processing unit 36 uses the threshold for bead appearance inspection stored in the determination threshold storage unit 34 to perform the bead appearance inspection based on comparison between the three-dimensional shape data related to the shape of the weld bead acquired by the sensor 4 and the master data of a non-defective workpiece which is predetermined for each workpiece. The data processing unit 36 creates an appearance inspection report including a defect determination result as an inspection determination result (that is, information indicating presence or absence of a defect that requires the repair welding) and information on a defect section for each defect portion, stores the appearance inspection report in the inspection result storage unit 33, and transmits the appearance inspection report to the host device 1 or the robot control device 2 via the communication unit 30. If the data processing unit 36 determines that there is no defect portion that requires the repair welding in the workpiece Wk as an inspection object, the data processing unit 36 creates an appearance inspection report including an inspection determination result that indicates passing the bead appearance inspection, stores the appearance inspection report in the inspection result storage unit 33, and transmits the appearance inspection report to the host device 1 via the communication unit 30.

In response to the acquisition of the three-dimensional shape data (see above) related to the shape of the workpiece Wk from the shape detection control unit 35, the data processing unit 36 converts the data into a data format suitable for calculation processing executed by the inspection result determination unit 37. The conversion of the data format may include the modification processing as a so-called preprocessing to remove unnecessary point cloud data (for example, noise) included in the three-dimensional shape data (that is, the point cloud data), or processing for generating a 3D model of the workpiece Wk. The data processing unit 36 may perform the edge enhancement modification that enhances the position and shape of the workpiece Wk and enhances the edge portion of the workpiece Wk. The data processing unit 36 transmits the three-dimensional shape data related to the shape of the workpiece Wk after the conversion to the robot control device 2 via the communication unit 30.

The inspection result determination unit 37 performs the bead appearance inspection based on the comparison between the three-dimensional shape data related to the shape of the weld bead acquired by the sensor 4 and the master data of the non-defective workpiece which is predetermined for each workpiece, and inspects a shape reliability (for example, whether the weld bead is along a linear-shaped or curve-shaped welding line), bead missing, and the bead position displacement of the weld bead. The inspection result determination unit 37 performs a comparison (so-called image processing) between the data obtained by data conversion by the data processing unit 36 for the inspection determination (for example, image data generated based on the point cloud data) and the master data of the non-defective workpiece. Therefore, the inspection result determination unit 37 can highly accurately inspect the shape reliability, the bead missing, and the bead position displacement of the weld bead. The inspection result determination unit 37 calculates an inspection score indicating the inspection results of the shape reliability, the bead missing, and the bead position displacement of the weld bead, and creates the calculated value of the inspection score as an inspection result. Furthermore, the inspection result determination unit 37 compares the created inspection result with a threshold for inspection result stored in the memory 32. The inspection result determination unit 37 outputs the appearance inspection result including the information on the comparison result (that is, whether the acquired first inspection result indicates passing or failing in the bead appearance inspection) to the host device 1 and the monitor MN2.

The inspection result determination unit 37 performs the bead appearance inspection) in which neural networks based on plural types of artificial intelligence are formed respectively, and presence or absence of a welding defect is determined based on the AI targeting the three-dimensional shape data related to the shape of the weld bead acquired by the sensor 4, or three-dimensional shape data after the above three-dimensional shape data is preprocessed by the data processing unit 36, and inspects presence or absence of the hole, the pit, the undercut, the spattering, and the protrusion of the weld bead. The hole, the pit, the undercut, the spattering, and the protrusion of the weld bead are merely exemplified, and the defect types inspected by the inspection result determination unit 37 are not limited thereto. When determining that a welding defect of a corresponding type is detected, the inspection result determination unit 37 specifies a position of the weld bead where the welding defect is detected. The inspection result determination unit 37 determines presence or absence of each welding defect by using a learning model (AI) obtained by learning processing for each type of the welding defect or each group of types of the welding defect in advance. Accordingly, the inspection result determination unit 37 can highly accurately inspect, for example, presence or absence of the hole, the pit, the undercut, the spattering, and the protrusion of the weld bead. The inspection result determination unit 37 calculates an inspection result (in other words, an inspection score indicating an occurrence probability) of the hole, the pit, the undercut, the spattering, and the protrusion of the weld bead, creates an appearance inspection result including a calculated value of the inspection score, and outputs the appearance inspection result to the host device 1 and the monitor MN2.

The inspection result determination unit 37 may determine whether the repair welding performed by the welding robot MC1 is possible (in other words, whether the repair welding performed by the welding robot MC1 is good or whether the repair welding performed by hands is good) based on the inspection result (inspection score) included in each appearance inspection result described above, and may include a determination result thereof in the above-described appearance inspection report and output the determination result.

The repair welding program creation unit 38 creates a repair welding program for the workpiece Wk to be executed by the welding robot MC1 by using the appearance inspection report of the workpiece Wk created by the data processing unit 36. The repair welding program may include various parameters such as the welding current, the welding voltage, the offset amount, the welding speed, and the posture and angle of the welding torch 400 for controlling the power supply device 500, the manipulator 200, the wire feeding device 300, the welding torch 400, and the like during the execution of the repair welding. The generated repair welding program may be stored in the processor 31, may be stored in the RAM in the memory 32, or may be transmitted to the host device 1 or the robot control device 2 via the communication unit 30 in association with the appearance inspection report.

The repair welding program creation unit 38 creates the repair welding program for the workpiece Wk (for example, the workpiece or the repair workpiece) to be executed by the welding robot MC1 by using the appearance inspection report of the workpiece Wk (for example, the workpiece or the repair workpiece) created by the inspection result determination unit 37 and the workpiece information (for example, information such as coordinates indicating a position of a detection point of a welding defect of the workpiece or the repair workpiece). The repair welding program may include various parameters such as the welding current, the welding voltage, the offset amount, the welding speed, and the posture and angle of the welding torch 400 for controlling the power supply device 500, the manipulator 200, the wire feeding device 300, the welding torch 400, and the like during the execution of the repair welding. The generated repair welding program may be stored in the processor 31 or may be stored in the RAM of the memory 32.

The sensor 4 is, for example, a three-dimensional shape sensor, is attached to a tip end of the welding robot MC1, and acquires a plurality of pieces of point cloud data capable of specifying the shape of the alignment pattern AP, the workpiece Wk, or the welded portion on the workpiece Wk (the shape of the weld bead). The sensor 4 generates the point cloud data capable of specifying the three-dimensional shape of the welded portion based on the acquired point cloud data, and transmits the generated point cloud data to the robot control device 2 or the inspection control device 3.

When the sensor 4 is not attached to the tip end of the welding robot MC1 and is disposed separately from the welding robot MC1, the sensor 4 may include a laser light source (not shown) that is configured to scan the vicinity of a position of the welding torch 400 of the welding robot MC1, the alignment pattern AP, the workpiece Wk, or the welded portion transmitted from the inspection control device 3, and a camera (not shown) that is disposed to be able to image an imaging region including the periphery of the position of the welding torch 400 of the welding robot MC1, the alignment pattern AP, the workpiece Wk, or the welded portion and that images a reflection trajectory (that is, a shape line of the welded portion) of reflected laser light of radiated laser light. In this case, the sensor 4 transmits shape data (in other words, image data) of the welding torch 400 of the welding robot MC1, the alignment pattern AP, the workpiece Wk, or the welded portion (that is, the weld bead) imaged by the camera to the inspection control device 3.

The camera described above includes at least a lens (not shown) and an image sensor (not shown). The image sensor is, for example, a solid-state imaging element such as a charge coupled device (CCD) or a complementary metal oxide semi-conductor (CMOS), and converts an optical image formed on an imaging surface into an electric signal.

A positional relationship between a coordinate system (welding coordinate system ΣW1) of the welding robot MC1 and the workpiece Wk will be described with reference to FIG. 3. FIG. 3 is a diagram illustrating the relationship between the welding coordinate system ΣW1 and the workpiece Wk.

The welding coordinate system ΣW1 is set for the welding robot MC1. The positions of the teaching points included in the teaching programs of welding operation and scan operation are defined based on the welding coordinate system ΣW1. Information on the welding coordinate system ΣW1 is stored in the memory 22 of the robot control device 2.

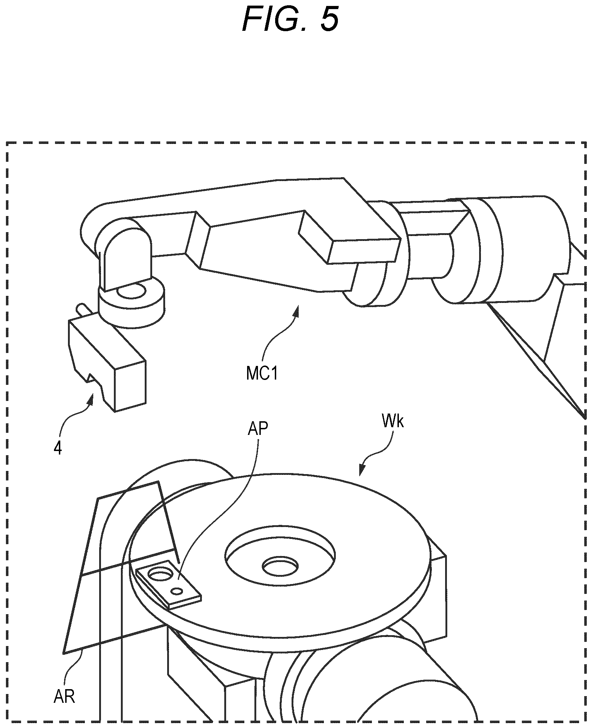

An example of calculating the position of the workpiece Wk using the alignment pattern AP will be described with reference to FIGS. 4 and 5, respectively. FIG. 4 is a diagram illustrating an example of the alignment pattern AP. FIG. 5 is a diagram illustrating an example of reading the alignment pattern AP.

A shape of the alignment pattern AP shown in FIG. 4 is an example and is not limited thereto. The alignment pattern AP shown in FIG. 5 is attached to a surface of the workpiece Wk as an example, but is not limited thereto, and may be attached at a position that can be scanned (read) by the sensor 4 of the welding robot MC1.

The alignment pattern AP is a plate for measuring the position (that is, a distance, an orientation (posture), and the like) of the workpiece Wk with respect to the welding robot MC1, and is attached at a predetermined position on the workpiece Wk (that is, any one original workpiece out of a plurality of original workpieces constituting the workpiece Wk). The alignment pattern AP is formed with two holes HO1 and HO2 having different sizes.

The robot control device 2 detects the two holes HO1 and HO2 from the three-dimensional shape data of the alignment pattern AP read by the sensor 4. The robot control device 2 respectively calculates center positions CT1 and CT2 of the two detected holes HO1 and HO2, connects these two center positions CT1 and CT2, and generates a vector VC whose start point is the center position of one hole (the hole HO1 in the example shown in FIG. 4) and whose end point is the center position of the other hole the hole HO2 in the example shown in FIG. 4. The robot control device 2 calculates an attaching angle (posture) of the alignment pattern AP based on an orientation of the generated vector VC, and calculates a distance between the welding robot MC1 and the workpiece Wk based on a length of the vector VC. Accordingly, the robot control device 2 can calculate a relative position of the workpiece Wk with respect to the welding robot MC1.

An example of calculating the position of the workpiece Wk based on the appearance shape of the workpiece Wk will be described with reference to FIG. 6. FIG. 6 is a diagram illustrating an example of scanning the workpiece Wk.

The robot control device 2 drives the welding robot MC1 to scan the workpiece Wk with the sensor 4. The robot control device 2 may acquire current position information of the workpiece Wk or the stage STG, which is transmitted from the host device 1, and may drive the welding robot MC1 to move the sensor 4 to a position where the workpiece Wk can be scanned. The sensor 4 transmits the three-dimensional shape data of the workpiece Wk to the robot control device 2.

The robot control device 2 reads, from the three-dimensional shape data of the workpiece Wk which is transmitted from the sensor 4, a shape of feature points (for example, a predetermined surface of the workpiece Wk or the original workpiece, corners of the predetermined surface, and predetermined holes formed in the surface) for specifying the position of the workpiece Wk. The robot control device 2 calculates the relative position (distance) of the workpiece Wk with respect to the welding robot MC1 based on the shape of the feature points.

The number of feature points may be one or more. The robot control device 2 may calculate the relative position (distance and posture) of the workpiece Wk with respect to the welding robot MC1 based on the respective positions of two or more feature points.

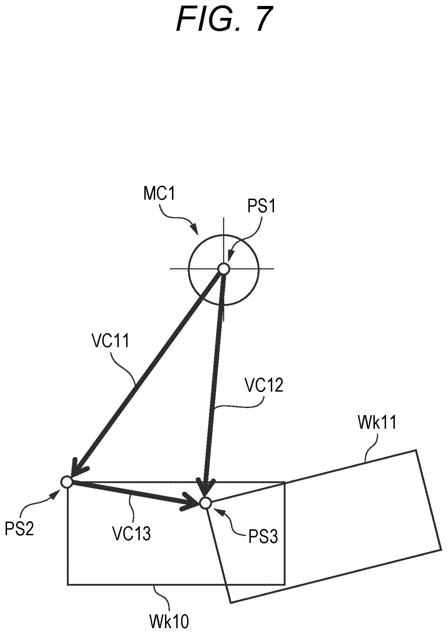

An example of calculating the position displacement amount of the workpiece Wk in the welding coordinate system ΣW1 will be described with reference to FIG. 7. FIG. 7 is a diagram illustrating an example of calculating the position displacement amount of the workpiece Wk.

In FIG. 7, in order to make the illustration easier to understand, a position (posture) of the workpiece Wk in the normal state included in the workpiece information of the workpiece Wk is shown as a normal workpiece Wk10, and an actual position (posture) of the workpiece Wk is shown as a position displacing workpiece Wk11. A position PS2 of the normal workpiece Wk10 indicates the position of the workpiece Wk in the normal state (that is, when there is no position displacement) included in the workpiece information of the workpiece Wk. A position PS3 of the position displacing workpiece Wk11 indicates the actual position of the workpiece Wk calculated based on the result of reading the workpiece Wk or the alignment pattern AP by the sensor 4.

Based on the feature points of the workpiece Wk or the alignment pattern AP read by the sensor 4, the robot control device 2 calculates the position PS3 (distance and posture) of the position displacing workpiece Wk11 with respect to a position PS1 of the welding robot MC1 in the welding coordinate system ΣW1. Based on the calculated position PS3 of the position displacing workpiece Wk11 and the position PS2 of the normal workpiece Wk10 (the position and posture in the normal state), the robot control device 2 calculates the position displacement amount (distance and angle) of the workpiece Wk with respect to the welding robot MC1. The example of calculating the position displacement amount of the workpiece Wk will be specifically described below.

The robot control device 2 calculates vectors VC11 and VC12 based on the position PS1 of the welding robot MC1, the position PS2 of the normal workpiece Wk10, and the position PS3 of the position displacing workpiece Wk11.

Here, the vector VC11 is a vector whose start point is the position PS1 of the welding robot MC1 in the welding coordinate system ΣW1 and whose end point is the position PS2 of the normal workpiece Wk10 with respect to the welding robot MC1. The vector VC12 is a vector whose start point is the position PS1 of the welding robot MC1 in the welding coordinate system ΣW1 and whose end point is the position PS3 of the position displacing workpiece Wk11 with respect to the welding robot MC1.

The robot control device 2 calculates a vector VC13 based on a sum of an inverse vector of the vector VC11 and the vector VC12. The vector VC13 is a vector whose start point is the position PS2 of the normal workpiece Wk10 and whose end point is the position PS3 of the position displacing workpiece Wk11, and is a vector indicating the position displacement amount (distance and angle) of the workpiece Wk.

The robot control device 2 calculates the position displacement amount of the workpiece Wk with respect to the welding robot MC1 based on the calculated vector VC13, and executes position modification on the teaching points included in the teaching program of welding operation corresponding to the workpiece Wk, and position modification on the teaching points included in the teaching program of scan operation based on the calculated position displacement amount of the workpiece Wk.

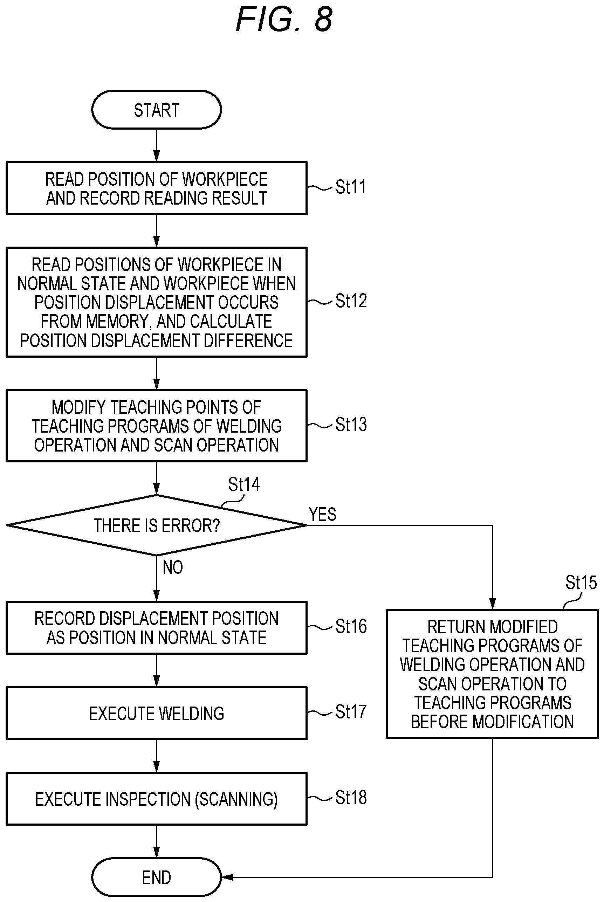

Next, an example of an operation procedure of the robot control device 2 according to the first embodiment will be described with reference to FIG. 8. FIG. 8 is a flowchart illustrating a modification procedure example of the teaching program executed by the robot control device 2 according to the first embodiment.

The robot control device 2 acquires the three-dimensional shape data of the workpiece Wk (original workpiece) or the alignment pattern AP, which is transmitted from the sensor 4. The robot control device 2 calculates the position PS3 of the position displacing workpiece Wk11 with the welding coordinate system ΣW1 of the welding robot MC1 as a reference based on the three-dimensional shape data, and records the position PS3 in the memory 22 (St11).

The robot control device 2 reads the calculated position PS3 of the position displacing workpiece Wk11 (the position of the workpiece Wk when the displacement occurs) and the position PS2 of the normal workpiece Wk10 (that is, the position of the workpiece Wk in the normal state) from the memory 22, and calculates the position displacement amount (difference) of the workpiece Wk (St12).

The robot control device 2 modifies the positions of the teaching points included in the teaching programs of welding operation and scan operation based on the calculated position displacement amount of the workpiece Wk (St13).

When the position modification of the teaching points included in all the teaching programs used to produce the workpiece Wk is completed, the robot control device 2 determines whether there is a modification error in at least one of the modified teaching programs (St14). The modification error described here indicates that operation processes such as production and inspection of the workpiece Wk based on the modified teaching program cannot be executed. For example, when the positions of the teaching points included in the modified teaching program exceed an operation region of the welding robot MC1, the robot control device 2 determines that there is a modification error when the welding torch 400 or the sensor 4 interferes with the workpiece Wk, the stage STG on which the workpiece Wk is placed, the jig, and the like according to the modified teaching program.

If the robot control device 2 determines in the processing of step St14 that there is a modification error in the at least one of the modified teaching programs (St14, YES), the robot control device 2 returns the modified teaching programs of welding operation and scan operation to the teaching programs of welding operation and scan operation before the modification (St15). After the processing in step St15, the robot control device 2 may generate a notification (for example, image data and audio data) indicating that the teaching programs of welding operation and scan operation cannot be modified, transmit the notification to the host device 1 or the inspection control device 3, and output the notification from the corresponding monitors MN1 and MN2. The notification may include the calculated workpiece information, information of the position displacement amount of the workpiece Wk, and the like.

On the other hand, if the robot control device 2 determines in the processing of step St14 that there is no modification error in the modified teaching program (St14, NO), the robot control device 2 records (overwrites) the position PS3 of the position displacing workpiece Wk11 as the position included in the workpiece information of the workpiece Wk (that is, the position PS2 of the normal workpiece Wk10) (St16).

The robot control device 2 creates the main welding program based on the modified teaching program of welding operation, and causes the welding robot MC1 to execute the main welding based on the created main welding program (St17). The robot control device 2 creates the scan program based on the modified teaching program of scan operation, and causes the sensor 4 of the welding robot MC1 to execute the appearance inspection on the workpiece Wk based on the created scan program (St18).

The robot control device 2 may execute the processing of step St14 each time one teaching program is modified. In such a case, the robot control device 2 repeats the processing of step St14 the number of times corresponding to the number of teaching programs used to produce the workpiece Wk.

As described above, even when the single welding robot MC1 uses the plurality of teaching programs to produce the workpiece Wk, the robot control device 2 according to the first embodiment can more efficiently modify the positions of the teaching points included in the teaching programs. The robot control device 2 can collectively modify all the teaching programs used to produce the workpiece Wk by calculating the position displacement amount of the workpiece Wk once, and thus, it is possible to effectively prevent a decrease in a production efficiency of the workpiece Wk and to produce the workpiece Wk with higher quality.

### (Modification of First Embodiment)

The welding system 100 according to the first embodiment described above has shown an example in which the robot control device 2 modifies the plurality of teaching programs. The welding system 100A according to the modification of the first embodiment uses production equipment (for example, the welding robot MC1 and the workpiece Wk) constructed in a virtual space (three-dimensional space) by the offline teaching device 5 to describe an example of modifying the plurality of teaching programs.

First, a configuration of the welding system 100A according to the modification of the first embodiment will be described. Hereinafter, the welding system 100A according to the modification of the first embodiment will be described with reference to FIG. 1. In the following description, descriptions of configurations and functions similar to those of the welding system 100 according to the first embodiment will be omitted.

The welding system 100A according to the modification of the first embodiment is a configuration including the host device 1 connected to the external storage ST, the input interface UI1, and the monitor MN1, the robot control device 2, the inspection control device 3, the sensor 4, the offline teaching device 5, the welding robot MC1, and the monitors MN2 and MN3. The teach pendant TP1 is not an essential component and may be omitted. The monitors MN2 and MN3 are not essential components and may be omitted.

The offline teaching device 5 is connected to the robot control device 2, the inspection control device 3, the monitor MN3, and the input interface UI3 such that data can be communicated among the offline teaching device 5, the robot control device 2, the inspection control device 3, the monitor MN3, and the input interface UI3. The offline teaching device 5 stores, as setting information, the position information of the welding line for each workpiece Wk for which the teaching program is to be created or the teaching program has already been created, and position information of the workpiece Wk with respect to the welding robot MC1.

The offline teaching device 5 constructs virtual production equipment (for example, a virtual welding robot, a virtual workpiece, a virtual stage, and a virtual jig) in the virtual space, and creates the teaching program of welding operation and the teaching program of scan operation of the workpiece Wk based on control commands and various kinds of data transmitted from the input interface UI3 (for example, the three-dimensional shape data related to the shape of the weld bead or the workpiece Wk, data of the 3D model, and the position information of the welding line), various kinds of data output from the robot control device 2 or the inspection control device 3 (for example, the three-dimensional shape data related to the weld bead or the workpiece Wk, data of the 3D model of the workpiece Wk, and the position information of the welding line), and the like. The offline teaching device 5 transmits the created teaching program of welding operation and the created teaching program of scan operation to the robot control device 2. The created teaching program of scan operation may be transmitted to the inspection control device 3 as well as the robot control device 2. The offline teaching device 5 stores the created teaching program of welding operation and the created teaching program of scan operation for each workpiece Wk.

The offline teaching device 5 constructs the virtual production equipment in the virtual space based on the position information of the welding line, generates a teaching assistant image (not shown) in which the welding line corresponding to the workpiece Wk, a scan region scanned by the sensor 4, and the like are superimposed on the virtual workpiece corresponding to the workpiece Wk, and transmits the teaching assistant image to the monitor MN3 to display.

The monitor MN3 may be implemented by a display device such as an LCD or an organic EL. The monitor MN3 displays a teaching assistant screen transmitted from the offline teaching device 5. The monitor MN3 displays the teaching assistant image which is transmitted from the offline teaching device 5 and in which an operation trajectory of the sensor 4 or an operation trajectory of the welding torch 400 or the like is superimposed on an image of the virtual production equipment.

The input interface UI3 is an operator interface that detects an input operation of the operator and outputs the input operation to the host device 1, and may be implemented by, for example, a mouse, a keyboard, or a touch panel. The input interface UI3 receives input operations of the position information of the welding line, the welding setting information, the scan setting information, the 3D model of the workpiece Wk used for creating the teaching programs of scan operation and welding operation, and the like, or input operations of the already created teaching programs of welding operation and scan operation. The monitor MN3 and the input interface UI3 here may be a terminal device P3 (for example, a PC, a notebook PC, and a tablet terminal) configured integrally.

Hereinafter, an internal configuration of each configuration of the welding system 100A according to the modification of the first embodiment will be described with reference to FIG. 2. In the following description, descriptions of configurations and functions similar to those of the welding system 100 according to the first embodiment will be omitted.

The offline teaching device 5 is connected to the robot control device 2, the inspection control device 3, the monitor MN3, and the input interface UI3 such that data can be communicated among the offline teaching device 5, the robot control device 2, the inspection control device 3, the monitor MN3, and the input interface UI3. The offline teaching device 5 creates the teaching program of scan operation of the workpiece Wk based on the position information of the welding line, which is transmitted from the input interface UI3. The offline teaching device 5 may create the teaching programs of the workpiece Wk based on the position information of the welding line, which is transmitted from the input interface UI3, and various kinds of data such as welding operation setting information and scan operation setting information. The offline teaching device 5 includes a communication unit 50, a processor51, a memory 52, and an input and output unit 53.

The communication unit 50 is connected to the robot control device 2, the inspection control device 3, the input interface UI3, and the monitor MN3 such that data can be communicated among the communication unit 50, the robot control device 2, the inspection control device 3, the input interface UI3, and the monitor MN3. The communication unit 50 associates the created teaching programs of welding operation and scan operation with various kinds of data (for example, the position information of the welding line, the welding operation setting information, the scan operation setting information, and the workpiece information of the workpiece Wk) used to create the teaching programs of welding operation and scan operation, and transmits the associated matter to the robot control device 2.

The processor 51 is implemented by, for example, a CPU or an FPGA, and executes various kinds of processing and controls in cooperation with the memory 52. Specifically, the processor 51 implements functions of a 3D calculation unit 54 and a program creation unit 55 by referring to a program, a learning model, and the like held in the memory 52 and executing the program.

The memory 52 includes, for example, a RAM as a workpiece memory used when processing of the processor 51 is executed, and a ROM that stores a program that defines the processing of the processor 51. Data generated or acquired by the processor 51 is temporarily stored in the RAM. The program that defines the processing of the processor 51 is written into the ROM. The memory 52 stores the teaching program of welding operation and the teaching program of scan operation created by the program creation unit 55 in association with the workpiece information. The memory 52 may store a learning model and learning data for creating the teaching program of welding operation and the teaching program of scan operation.

The learning model has a semiconductor memory such as a RAM and a ROM, and a storage device including any one of storage devices such as solid state drive (SSD) or hard disk drive (HDD).

The learning model stores, for example, learning data for generating the teaching program of welding operation and the teaching program of scan operation which are executed by the processor 51, and editing information and setting information based on the operation of the operator at the time of creating the teaching program of welding operation and the teaching program of scan operation which are created in the past.

The learning model automatically generates a welding operation or a scan operation (that is, the operation trajectory of the sensor 4, the scan section, an effective scan region, and the like) based on the welding operation setting information. Based on the editing information and the setting information based on the operation of the operator at the time of creating the teaching program of welding operation and the teaching program of scan operation which are created in the past, the learning model may generate labeled data (learning data) for generating the teaching program of welding operation and the teaching program of scan operation.

The learning for generating the labeled data may be performed by using one or more statistical classification techniques. Examples of the statistical classification technique include linear classifiers, support vector machines, quadratic classifiers, kernel estimation, decision trees, artificial neural networks, bayesian techniques and/or networks, hidden markov models, binary classifiers, multi-class classifiers, a clustering technique, a random forest technique, a logistic regression technique, a linear regression technique, and a gradient boosting technique. However, the statistical classification technique to be used is not limited thereto.

The input and output unit 53 acquires the execution command, the 3D model of the workpiece Wk, the welding operation setting information, and the scan operation setting information which are transmitted from the input interface UI3, and the position information of the welding line, which is transmitted from the robot control device 2, the inspection control device 3, or the input interface UI3, and output the acquired matter to the processor 51. The input and output unit 53 transmits, to the monitor MN3, the image of the virtual production equipment (for example, the virtual welding robot, the virtual workpiece, and the virtual stage) generated by the 3D calculation unit 54, and the image which is transmitted from the offline teaching device 5 and in which the operation trajectory of the sensor 4 or the operation trajectory of the welding torch 400 or the like is superimposed on the image of the virtual production equipment.

For example, based on the three-dimensional shape data related to the shape of the workpiece Wk or the weld bead, the data of the 3D model of the workpiece Wk, the workpiece information of the workpiece Wk, data related to the production equipment (for example, position information of the stage, position information of the jig, robot information or position information of the welding robot MC1), and the like, the 3D calculation unit 54 virtually constructs production equipment necessary for performing the main welding or appearance inspection on the workpiece Wk. The 3D calculation unit 54 converts the data of the virtually constructed production equipment into image data, outputs the image data to the input and output unit 53, and displays the image data on the monitor MN3.

In the virtual space, the 3D calculation unit 54 generates a teaching assistant screen (image data) in which the position information of at least one welding line and the effective scan region of the sensor 4 that scans this welding line are superimposed on the virtual production equipment. If the 3D calculation unit 54 can acquire the teaching program of welding operation created by the program creation unit 55, the 3D calculation unit 54 may generate a teaching assistant screen (image data) in which one or more teaching points included in the teaching program of welding operation, the operation trajectory (specifically, assistant scan section, welding section, and the like) of the welding torch 400, and the like are virtually superimposed on the production equipment.

The 3D calculation unit 54 generates a teaching assistant screen (image data) in which one or more teaching points included in the teaching program of scan operation created by the program creation unit 55, the operation trajectory (specifically, an operation trajectory indicating various operations such as an approach operation, a retract operation, and an avoidance operation, the assistant scan section, the scan section, and the like) of the sensor 4, and the like are superimposed on the virtual production equipment. The 3D calculation unit 54 converts, into image data, the data of the virtual production equipment on which data included in various teaching programs is superimposed, outputs the image data to the input and output unit 53, and displays the image data on the monitor MN3. Based on the teaching programs of welding operation and scan operation, or various kinds of data related to the production equipment and the position information of the welding line, or the like, the 3D calculation unit 54 may generate a teaching assistant screen (image data) in which the teaching points of the welding operation or the scan operation, the operation trajectory (specifically, the assistant scan section, a welding section, the scan section, and the like) of the welding torch 400 or the sensor 4, and the like are collectively superimposed on the virtual production equipment.

Based on the position information of the welding line (for example, the data of the 3D model of the workpiece Wk, the three-dimensional shape data related to the shape of the workpiece Wk or the weld bead, coordinate information on the start point and end point of the welding line), the welding operation setting information, the scan operation setting information, and the like, the program creation unit 55 creates the teaching program of welding operation and the teaching program of scan operation. The program creation unit 55 may use various kinds of input information, the learning model stored in the memory 52, algorithms such as mathematical programming, and the like to create the teaching program of welding operation and the teaching program of scan operation. The program creation unit 55 includes a welding operation creation unit 551 and a scan operation creation unit 552.

The welding operation creation unit 551 creates the teaching program of welding operation for executing the main welding on the workpiece Wk based on the input position information of the welding line and the welding operation setting information.

Based on at least the input position information of the welding line, the scan operation creation unit 552 creates the teaching program of scan operation for executing an appearance scan on the workpiece Wk (original workpiece), and an appearance inspection on a weld bead generated on the workpiece Wk or other appearance inspection portions. Based on the input operation trajectory of the welding operation, the 3D model, one or more effective scan regions disposed on the 3D model, the scan operation setting information, and the like, the scan operation creation unit 552 may create the teaching program of scan operation for executing the appearance scan on the workpiece Wk, the appearance inspection on the weld bead generated on the workpiece Wk or other appearance inspection portions, and the like.

Here, an example of acquiring the position information of the welding line is described. The example of acquiring the position information of the welding line, which will be described below, is merely an example, and needless to say, the present invention is not limited thereto.

The offline teaching device 5 acquires the teaching program of welding operation of the workpiece Wk, the main welding program, information on the operation trajectory of the welding operation, and the like which are transmitted from the robot control device 2 or the terminal device P3. The position information of the welding line of the workpiece Wk included in these programs or information is acquired.

Based on the 3D model of the workpiece Wk transmitted from the terminal device P3, the offline teaching device 5 may acquire the position information of the welding line from the welding line data linked to this 3D model. If the welding line data is not linked to the 3D model of the workpiece Wk transmitted from the terminal device P3, the offline teaching device 5 may acquire the position information of the welding line based on the three-dimensional shape of the 3D model. For example, based on surface shapes of two or more original workpieces that constitute the workpiece Wk, the offline teaching device 5 acquires, as the position information of the welding line, an intersection point where the surfaces of these original workpieces intersect or a contact point where the surfaces of the original workpiece come into contact with each other.

The offline teaching device 5 may acquire the position information of the welding line based on scan data (for example, mesh data) acquired by scanning the workpiece Wk or the weld bead formed on the workpiece Wk with the sensor 4. The offline teaching device 5 may acquire the position information of the welding line by teaching using a teach pendant (not shown).

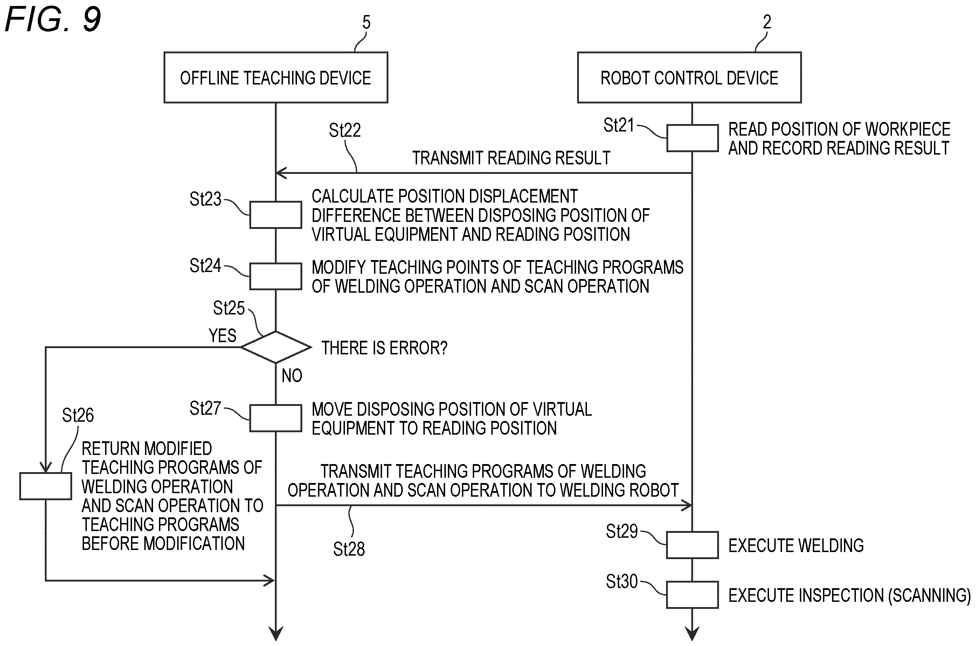

Next, an operation procedure of the robot control device 2 and the offline teaching device 5 according to the modification of the first embodiment will be described with reference to FIG. 9. FIG. 9 is a sequence diagram illustrating a correction procedure example of teaching programs executed by the robot control device 2 and the offline teaching device 5 according to the modification of the first embodiment.

The robot control device 2 acquires the three-dimensional shape data of the workpiece Wk (original workpiece) or the alignment pattern AP, which is transmitted from the sensor 4. The robot control device 2 calculates the position PS3 of the position displacing workpiece Wk11 with the welding coordinate system W1 of the welding robot MC1 as a reference based on the three-dimensional shape data, and records the position PS3 in the memory 22 (St21).

The robot control device 2 generates a reading result in which information on the calculated position PS3 of the position displacing workpiece Wk11 and the three-dimensional shape data of the position displacing workpiece Wk11 are associated with each other, and transmits the reading result to the offline teaching device 5 (St22).

The offline teaching device 5 acquires the reading result transmitted from the robot control device 2. The offline teaching device 5 calculates a position displacement amount (difference) of the workpiece Wk between a disposing position of the virtual production equipment (virtual equipment) constructed in the virtual space and the acquired position PS3 (position of the workpiece Wk when the displacement occurs) of the position displacing workpiece Wk11 (St23). Specifically, the offline teaching device 5 calculates the position displacement amount (difference) of the workpiece Wk between the disposing position (that is, position of the workpiece Wk in the normal state) of the virtual workpiece corresponding to the position PS2 of the normal workpiece Wk10 and the position PS3 of the position displacing workpiece Wk11 (St23).

The offline teaching device 5 modifies the positions of the teaching points included in the teaching programs of welding operation and scan operation based on the calculated position displacement amounts of the workpiece Wk (St24).

When the position modification of the teaching points included in all the teaching programs used to produce the workpiece Wk is completed, the offline teaching device 5 determines whether there is a modification error in at least one of the modified teaching programs (St25).

If the offline teaching device 5 determines in the processing of step St25 that there is a modification error in the at least one of the modified teaching programs (St25, YES), the offline teaching device 5 returns the modified teaching programs of welding operation and scan operation to the teaching programs of welding operation and scan operation before the modification (St26). After the processing in step St26, the offline teaching device 5 may generate a notification (for example, image data and audio data) indicating that the teaching programs of welding operation and scan operation cannot be modified, and output the notification from the monitor MN3. The notification may include the calculated workpiece information, information of the position displacement amount of the workpiece Wk, and the like.

On the other hand, if the offline teaching device 5 determines in the processing of step St25 that there is no modification error in the modified teaching program (St25, NO), the offline teaching device 5 records (overwrites) the position PS3 of the position displacing workpiece Wk11 as the position included in the workpiece information of the workpiece Wk (that is, the position PS2 of the normal workpiece Wk10) (St27).

The offline teaching device 5 transmits the modified teaching programs of welding operation and scan operation to the robot control device 2 (St28).

The robot control device 2 acquires the teaching programs of welding operation and scan operation transmitted from the offline teaching device 5. The robot control device 2 creates the main welding program based on the welding operation, and causes the welding robot MC1 to execute the main welding based on the created main welding program (St29). The offline teaching device 5 creates the scan program based on the modified teaching program of scan operation, and causes the sensor 4 of the welding robot MC1 to execute the appearance inspection on the workpiece Wk based on the created scan program (St30).

The offline teaching device 5 may execute the processing of step St25 each time one teaching program is modified. In such a case, the offline teaching device 5 repeats the processing of step St25 the number of times corresponding to the number of teaching programs used to produce the workpiece Wk.

As described above, even when the single welding robot MC1 uses a plurality of teaching programs to produce the workpiece Wk, the offline teaching device 5 according to the modification of the first embodiment can more efficiently modify the positions of the teaching points included in the teaching programs. The offline teaching device 5 can collectively modify all the teaching programs used to produce the workpiece Wk by calculating the position displacement amount of the workpiece Wk once, and thus, it is possible to effectively prevent a decrease in a production efficiency of the workpiece Wk and to produce the workpiece Wk with higher quality.

As described above, the robot control device 2 according to the first embodiment includes the communication unit 20 (an example of the acquisition unit) configured to acquire information (for example, the three-dimensional shape data and the alignment pattern) related to the position of the workpiece Wk to be produced by welding, the memory 22 (an example of the storage unit) configured to store the set position of the workpiece Wk with the welding robot MC1 (an example of a robot) that performs production as a reference, the processor 21 (an example of the calculation unit) configured to calculate the position displacement amount of the workpiece based on the actual measured position (for example, the position PS3 of the position displacing workpiece Wk11 shown in FIG. 7) of the workpiece Wk based on the information related to the position of the workpiece Wk and the set position of the workpiece Wk (for example, the position of the workpiece Wk included in the workpiece information of the workpiece Wk, which is the position PS2 of the normal workpiece Wk10 shown in FIG. 7), the processor 21 (an example of the modification unit) configured to modify the positions of the teaching points of the plurality of teaching programs used for the production by the welding robot MC1 based on the position displacement amount of the workpiece Wk, and the robot control unit (an example of the control unit) configured to control the welding robot MC1 using the plurality of modified teaching programs.

Accordingly, even when the single welding robot MC1 uses a plurality of teaching programs to produce the workpiece Wk, the robot control device 2 according to the first embodiment can more efficiently modify the positions of the teaching points included in the teaching programs. The robot control device 2 can collectively modify all the teaching programs used to produce the workpiece Wk by calculating the position displacement amount of the workpiece Wk once, and thus, it is possible to effectively prevent a decrease in a production efficiency of the workpiece Wk and to produce the workpiece Wk with higher quality.

The processor 21 of the robot control device 2 according to the first embodiment determines whether positions of teaching points of the modified teaching programs are outside an operating range of the welding robot MC1. If the robot control unit 25 determines that the positions of the teaching points of the modified teaching programs are not outside the operating range of the welding robot MC1, the robot control unit 25 controls the welding robot MC1 by using the plurality of modified teaching programs. Accordingly, only when it is determined that there is no modification error in the modified teaching program, the robot control device 2 according to the first embodiment can produce the workpiece Wk using the plurality of teaching programs in which the modification of the teaching point is reflected.

If the robot control unit 25 of the robot control device 2 according to the first embodiment determines that the positions of the teaching points of the modified teaching programs are outside the operating range of the welding robot MC1, the robot control unit 25 returns the positions of the teaching points of the modified teaching programs to the positions of the teaching points of the teaching programs before the modification. Accordingly, if the robot control device 2 according to the first embodiment determines that there is a modification error in the modified teaching programs, the robot control device 2 can prevent the teaching points from being erroneously modified by returning all the already modified teaching programs to the teaching programs before the modification.

In the robot control device 2 according to the first embodiment, the information related to the position of the workpiece Wk is the three-dimensional shape data of the workpiece Wk. The processor 21 calculates the actual measured position of the workpiece Wk based on the three-dimensional shape data. Accordingly, the robot control device 2 according to the first embodiment can calculate an actual position of the workpiece Wk (the position PS3 of the position displacing workpiece Wk11) based on the three-dimensional shape data of the workpiece Wk scanned by the sensor 4 of the welding robot MC1. Therefore, the welding system 100 does not require a measuring device (for example, a dedicated camera or the like) for measuring the position of the workpiece Wk. The welding system 100 can more effectively prevent a decrease in the production efficiency of the workpiece Wk due to attaching or detaching the measuring device to or from the welding robot MC1 each time the teaching program is modified.

The processor 21 of the robot control device 2 according to the first embodiment detects feature points of the workpiece Wk by using the three-dimensional shape data, and calculates the actual measured position of the workpiece Wk based on the detected feature points. Accordingly, the robot control device 2 according to the first embodiment can calculate an actual position of the workpiece Wk (the position PS3 of the position displacing workpiece Wk11) by using the three-dimensional shape data of the workpiece Wk scanned by the sensor 4 included in the welding robot MC1.

The feature point in the robot control device 2 according to the first embodiment is a predetermined hole formed in the workpiece Wk. Accordingly, the robot control device 2 according to the first embodiment can calculate an actual position of the workpiece Wk (the position PS3 of the position displacing workpiece Wk11) by using the three-dimensional shape data of the workpiece Wk scanned by the sensor 4 included in the welding robot MC1.

The feature point in the robot control device 2 according to the first embodiment is a predetermined surface of the workpiece Wk or a corner of the surface. Accordingly, the robot control device 2 according to the first embodiment can calculate an actual position of the workpiece Wk (the position PS3 of the position displacing workpiece Wk11) by using the three-dimensional shape data of the workpiece Wk scanned by the sensor 4 included in the welding robot MC1.

The information related to the position of the workpiece Wk in the robot control device 2 according to the first embodiment is the three-dimensional shape data of the alignment pattern AP attached to the workpiece Wk. The alignment pattern AP is formed with the two holes HO1 and HO2 having different sizes. The processor 21 calculates the actual measured position of the workpiece Wk based on positions of the two holes HO1 and HO2. Accordingly, the robot control device 2 according to the first embodiment can highly accurately calculate the position of the workpiece Wk based on the alignment pattern AP.

As described above, the welding system 100A (an example of the offline teaching system) according to the modification of the first embodiment includes the robot control device 2 configured to control the welding robot MC1 (an example of the robot) that produces the workpiece Wk by welding, and the offline teaching device 5 communicably connected to the robot control device 2 and constructing the workpiece Wk and the welding robot MC1 in the virtual space. The offline teaching device 5 acquires information related to the position of the workpiece Wk (for example, the three-dimensional shape data and the alignment pattern AP), calculates the position displacement amount of the workpiece Wk based on the actual measured position of the workpiece Wk based on the information related to the position of the workpiece Wk (for example, the position PS3 of the position displacing workpiece Wk11 shown in FIG. 7) and the set position (for example, the position of the workpiece Wk included in the workpiece information of the workpiece Wk, which is the position PS2 of the normal workpiece Wk10 shown in FIG. 7) of the workpiece Wk with the welding robot MC1 as a reference, modifies the positions of the teaching points of the plurality of teaching programs used for the production by the welding robot MC1 based on the position displacement amount of the workpiece Wk, and transmits the plurality of modified teaching programs to the robot control device 2. The robot control device 2 controls the welding robot MC1 by using the plurality of modified teaching programs.

As described above, even when the single welding robot MC1 uses the plurality of teaching programs to produce the workpiece Wk, the welding system 100A including the offline teaching device 5 according to the modification of the first embodiment can more efficiently modify the positions of the teaching points included in the teaching programs. The offline teaching device 5 can collectively modify all the teaching programs used to produce the workpiece Wk by calculating the position displacement amount of the workpiece Wk once, and thus, it is possible to effectively prevent a decrease in a production efficiency of the workpiece Wk and to produce the workpiece Wk with higher quality.

Although various embodiments have been described above with reference to the drawings, it is needless to say that the present disclosure is not limited to such examples. It is apparent to those skilled in the art that various modifications, corrections, substitutions, additions, deletions, and equivalents can be conceived within the scope described in the claims, and it is understood that such modifications, corrections, substitutions, additions, deletions, and equivalents also fall within the technical scope of the present disclosure. In addition, components in the various embodiments described above may be combined freely in a range without deviating from the spirit of the disclosure.

The present application is based on Japanese Patent Application No. 2022-066608 filed on April 13, 2022, and the contents thereof are incorporated herein by reference.

### INDUSTRIAL APPLICABILITY

The present disclosure is useful as an offline teaching device and an offline teaching system that more efficiently modify teaching points of teaching programs for executing different operations by using the same robot.

### REFERENCE SIGNS LIST

1 host device
2 robot control device
3 inspection control device
4 sensor
5 offline teaching device
10, 20, 30, 50 communication unit
11, 21, 31, 51 processor
12, 22, 32, 52 memory
23 main welding program creation unit
24 scan program creation unit
25 robot control unit
26 power supply control unit
100, 100A welding system
200 manipulator
300 wire feeding device
301 welding wire
400 welding torch
500 power supply device
AP alignment pattern
MC1 welding robot
MN1, MN2, MN3 monitor
UI1, UI3 input interface
Wk workpiece
Wk10 normal workpiece
Wk11 position displacing workpiece

## Claims

1. A robot control device, comprising:
an acquisition unit configured to acquire information related to a position of a workpiece produced by welding;
a storage unit configured to store a set position of the workpiece with a robot configured to perform the production as a reference;
a calculation unit configured to calculate a position displacement amount of the workpiece based on the set position of the workpiece and an actual measured position of the workpiece based on the information related to the position of the workpiece;
a modification unit configured to modify positions of teaching points of a plurality of teaching programs used by the robot in the production based on the position displacement amount of the workpiece; and
a control unit configured to control the robot by using the plurality of modified teaching programs.

2. The robot control device according to claim 1, wherein
the modification unit determines whether positions of teaching points of the modified teaching programs are outside an operating range of the robot, and
if it is determined that the positions of the teaching points of the modified teaching programs are not outside the operating range of the robot, the control unit controls the robot by using the modified teaching programs.

3. The robot control device according to claim 2, wherein
if it is determined that the positions of the teaching points of the modified teaching programs are outside the operating range of the robot, the control unit returns the positions of the teaching points of the plurality of modified teaching programs to the positions of the teaching points of the plurality of teaching programs before the modification.

4. The robot control device according to claim 1, wherein
the information related to the position of the workpiece is three-dimensional shape data of the workpiece, and
the calculation unit calculates the actual measured position of the workpiece based on the three-dimensional shape data.

5. The robot control device according to claim 4, wherein
the calculation unit is configured to:
use the three-dimensional shape data to detect a feature point of the workpiece, and
calculate the actual measured position of the workpiece based on the detected feature point.

6. The robot control device according to claim 5, wherein
the feature point is a predetermined hole formed in the workpiece.

7. The robot control device according to claim 5, wherein
the feature point is a predetermined surface of the workpiece or a corner of the surface.

8. The robot control device according to claim 1, wherein
the information related to the position of the workpiece is three-dimensional shape data of a pattern attached to the workpiece,
the pattern is formed with two holes having different sizes, and
the calculation unit calculates the actual measured position of the workpiece based on positions of the two holes.

9. An offline teaching system, comprising:
a robot control device configured to control a robot configured to produce a workpiece by welding, and
an offline teaching device communicably connected to the robot control device and constructing the workpiece and the robot in a virtual space, wherein
the offline teaching device is configured to:
acquire information related to a position of the workpiece,
calculate a position displacement amount of the workpiece based on a set position of the workpiece with the robot as a reference and an actual measured position of the workpiece based on the information related to the position of the workpiece,
modify positions of teaching points of a plurality of teaching programs used by the robot in the production based on the position displacement amount of the workpiece, and
transmit the plurality of modified teaching programs to the robot control device, and
the robot control device controls the robot by using the plurality of modified teaching programs.
